# EUROPÄISCHE PATENTANMELDUNG

(11) **EP 1 052 581 A1**
(43) Veröffentlichungstag der Anmeldung: **15.11.2000**
(21) Anmeldenummer: 99109127.3
(22) Anmeldetag: 08.05.1999
(51) Int. Cl.: G06F 17/50, G05B 19/418

(54) **Vorrichtung und Verfahren zur Planung von Bussystemen**

(71) Anmelder: PHOENIX CONTACT GmbH & Co. Kg, 32825 Blomberg (DE)
(72) Erfinder: Deitermann, Lydia Dipl.-Ing., 32825 Blomberg (DE); Aron, Ralf Dipl.-Ing., 32760 Detmold (DE); Lessmann, Gunnar Dipl.-Ing., 33039 Nieheim (DE); Krumsiek, Dietmar Dipl.-Ing., 32812 Bad Pyrmont (DE)
(74) Vertreter: Kampfenkel, Klaus, Dipl.-Ing.

(57) **Zusammenfassung**

Erfindungsgemäß wird ein Verfahren und eine Vorrichtung zur Bestimmung von Bussystem-Parametern und/oder -konfigurationen, insbesondere bei Feldbussystemen, in Form von digitalen Informationen, Listen, Plänen sowie graphischen Darstellungen bereitgestellt, welche eine Einrichtung zum Erfassen, Speichern und Selektieren von sowohl maschinenbezogenen und busbezogenen Daten umfaßt und ferner wenigstens eine Ausgabeeinrichtung zum Ausgeben und/oder Darstellen und/oder Übermitteln der Daten aufweist.

## Beschreibung

Die Erfindung betrifft eine Vorrichtung und ein Verfahren zur Bestimmung von Bussystemparametern und/oder - konfigurationen, insbesondere bei Feldbussystemen, in Form von digitalen Informationen, Listen, Plänen sowie graphischen Darstellungen gemäß den Ansprüchen 1 und 10.

Es sind Verfahren bekannt, die im wesentlichen in manueller Form zur Unterstützung der Projektierung der Feldbustechnik im Rahmen der Automatisierung von Anlagen eingesetzt werden. Bei diesen Verfahren werden zunächst die Peripheriesignale von beispielsweise Sensoren oder Aktoren festgelegt, die bei der Maschinenansteuerung verarbeitet werden müssen. In Abhängigkeit der zu erfassenden Peripheriesignale werden dann passende Feldbusmodule ausgewählt und mit den eingesetzten Sensoren und Aktoren verbunden. Zur geeigneten Verschaltung der Feldbusmodule wird dann die sogenannte Feldbustopologie festgelegt.

In der Praxis hat sich gezeigt, daß solange die Feldbusmodule in Schaltschränken eingebaut werden, der Zeitaufwand der manuellen Planung obiger Schritte noch in Grenzen gehalten werden kann. Seitdem jedoch die Feldbusmodule nicht mehr nur in Schaltschränken eingesetzt werden, sondern vielfach auch direkt an der Anlage verteilt eingebaut werden, ist der Aufwand für die Planung fast ebenso hoch geworden, wie der Aufwand, der bei nachträglichen Anpassungen entsteht.

Der Erfindung liegt daher die Aufgabe zugrunde, obige Nachteile zu vermeiden, d.h. eine Vorrichtung und ein Verfahren bereitzustellen, welche die Planung und Realisierung von insbesondere Automatisierungsvorhaben auf der Basis der Feldbustechnik erleichtert und welche ferner neue Vorgehensweisen bei der Projektierung entsprechender Anlagen unterstützt bzw. ermöglicht.

Die Lösung dieser Aufgabe erfolgt bereits durch die Merkmale der Ansprüche 1 und 10. Erfindungsgemäß wird dabei eine Vorrichtung zur Bestimmung von Bussystem-Parametern und/oder -konfigurationen, insbesondere bei Feldbussystemen, in Form von digitalen Informationen, Listen, Plänen sowie graphischen Darstellungen bereitgestellt, welche eine Einrichtung zum Erfassen, Speichern und Selektieren von sowohl maschinenbezogener und busbezogener Daten umfaßt und ferner wenigstens eine Ausgabeeinrichtung zum Ausgeben und/oder Darstellen und/oder Übermitteln der Daten aufweist.

Darüber hinaus wird erfindungsgemäß zur Lösung der Aufgabe ein Verfahren vorgegeben, welches zum Definieren oder Bereitstellen von Bussystem-Parametern und/oder - konfigurationen, insbesondere bei Feldbussystemen, in Form von digitalen Informationen, Listen, Plänen sowie graphischen Darstellungen, einsetzbar ist. Dabei umfaßt das Verfahren den Schritt des Erfassens, Speicherns und Selektierens von sowohl maschinenbezogenen Daten als auch von busbezogenen Daten, welche dann in einem weiteren Schritt ausgegeben und/oder dargestellt und/oder übermittelt werden können.

Das erfindungsgemäße Verfahren und die erfindungsgemäße Vorrichtung schaffen erstmals die Möglichkeit, in abgestufter Form, planungs- und realisierungsunterstützend Automatisierungsvorhaben auf der Basis der Feldbustechnik zu vereinfachen und zu beschleunigen.

In vorteilhafter Weiterbildung der erfindungsgemäßen Vorrichtung umfaßt diese eine Einrichtung zum selektiven manuellen und/oder automatischen Verknüpfen der Eingabedaten. Eine solche Einrichtung bietet insbesondere den Vorteil, daß sie in der Lage ist, die von der erfindungsgemäßen Vorrichtung erfaßten maschinenbezogenen und busbezogenen Daten aufeinander abzustimmen. Dies bedeutet, daß die erfindungsgemäße Vorrichtung in der Lage ist, entweder voll automatisch die eingegebenen Maschinendaten mit den Daten der erfaßten Busmodule zu verbinden oder die Möglichkeit besteht, die Vorrichtung auch manuell zu bedienen, um die entsprechenden Verknüpfungen herzustellen. Solche Verknüpfungen können insbesondere darin bestehen, daß Daten von Anschlußpunkten von beispielsweise Sensoren und/oder Aktoren mit entsprechenden Daten zugeordneter Feldbusmodule verbunden werden. Natürlich müssen die dazu notwendigen Peripheriesignaldaten zunächst im Rahmen der Erfassung maschinenbezogener Daten in die erfindungsgemäße Vorrichtung aufgenommen und/oder abgespeichert worden sein.

Im Rahmen der Erfindung umfassen die maschinenbezogenen Daten insbesondere Konstruktionsdaten über das Erfassen, Setzen und Verarbeiten von Peripheriesignalen der bereits oben erwähnten Sensoren und/oder Aktoren. Dabei weist die erfindungsgemäße Vorrichtung vorteilhafterweise Einrichtungen zum Einlesen dieser Daten auf, wie sie dem auf dem Gebiet tätigen Fachmann bekannt sind. Derartige Schnittstellen können jedoch auch dazu verwendet werden, beispielsweise ein maschinenbauliches CAD-System mit einzubinden oder anzuschließen, um so einen direkten Zugriff auf die entsprechenden Daten zu bekommen.

Ferner umfaßt in vorteilhafter Weiterbildung des Erfindungsgegenstandes die Vorrichtung eine Einrichtung, welche in der Lage ist, beispielsweise einem Datensatz aus maschinenbaulichen und busbezogenen Daten eine geeignete Adressierung zuzuordnen. Eine solche Adressierung ist deshalb von großem Nutzen, da die erfindungsgemäße Vorrichtung dadurch in der Lage ist, gleichfalls im Rahmen der Planung des Feldbussystems bereits Daten zur späteren Programmierung einer Automatisierungsanlage bereitzustellen. Auch wird hierdurch die Möglichkeit eröffnet, ein Programmierungswerkzeug in die erfindungsgemäße Vorrichtung bzw. in das erfindungsgemäße Planungswerkzeug einzubinden oder anzukoppeln.

In weiterer höchst vorteilhafter Weiterbildung der erfindungsgemäßen Vorrichtung umfaßt diese eine Einrichtung zum Bereitstellen einer Bussystemarchitektur. Diese Einrichtung ist auf der Grundlage unterschiedlicher Verknüpfungsvorgaben zwischen maschinen-bus-bezogener und/oder bus-bus-bezogener Daten in der Lage, eine Bussystemarchitektur zu erstellen und diese auf ihre Ausführbarkeit zu prüfen. Das Bereitstellen der Systemarchitektur bzw. der Bus-Topologie umfaßt dabei beispielsweise genaue Verdrahtungsvorgaben, nach welchen die erstellte Topologie in die Praxis umgesetzt werden kann.

Die erfindungsgemäße Vorrichtung ermöglicht dementsprechend in vorteilhafter Weise die Parametrierung und Konfiguration von Feldbussystemen. Die Konfigurierung kann dabei auf verschiedene Detaillierungs- und/oder Sichtebenen bezogen werden. Eine derartige selektive Betrachtungsweise erlaubt es dem Anwender mit der erfindungsgemäßen Vorrichtung interessens-, problem- oder funktionsorientiert umzugehen. Auch können in diesem Zusammenhang beispielsweise Signallisten mit zugeordneten Steuerungsadresse erstellt werden, die einem Programmierer ausreichende Informationen zur anschließenden oder parallelen Programmierung der Anlage zu geben.

Dabei ist es ebenfalls von großem Nutzen, daß die erfindungsgemäße Vorrichtung zusätzlich eine Einrichtung umfaßt, welche eine interaktive Verknüpfung von sowohl internen als auch externen Daten bzw. Datenfeldern ermöglicht. Damit ist der positive Effekt bewirkbar, daß sich Änderungen, die zum Beispiel in einer Ansicht vollzogen werden, falls erwünscht oder erforderlich, auf andere Daten bzw. Datenfelder und/oder Sichten unmittelbar bzw. interaktiv übertragen. Dies bedeutet aber auch, daß alle Sichten auf einen gemeinsamen Datenbestand zurückgreifen und daß zwischen ihnen eine interaktive Verknüpfung besteht.

In positiver Weiterbildung des erfindungsgemäßen Gegenstandes ist auch vorgesehen, in die erfindungsgemäße Vorrichtung bzw. in das erfindungsgemäße Bearbeitungswerkzeug ein dem Fachmann bekanntes ECAD-Bearbeitungs-Tool einzubinden. Eine solche Einbindung hat den Vorteil, daß die über die erfindungsgemäße Vorrichtung zur Verfügung stehenden aufbereiteten und/oder abgespeicherten Daten direkt zum Herstellen eines Schaltplans verwendet werden können.

Das im Rahmen der Erfindung entwickelte Verfahren umfaßt insbesondere im Schritt des Erfassens, Speicherns und Selektierens im Rahmen des Einlesens maschinenbezogener Daten, den Schritt des Erfassens von Konstruktionsdaten. Solche Daten beziehen sich im wesentlichen auf Peripheriesignale der Sensoren und/oder Aktoren von Maschinen oder Maschinenteilen, die zum Betrieb der Anlage erfaßt, gesetzt und verarbeitet werden sollen. Die besagten Daten werden entweder separat als Verknüpfungsdaten zwischen Busmodulen und dem Einbauort in der Maschine oder als Verbindungsdaten von Busmodulen untereinander in die erfindungsgemäße Vorrichtung eingelesen und weiter verarbeitet. Das heißt, daß die wechselweise Signalisation der Maschinen bzw. der Maschinenteile und der Busmodule bereits vor der Eingabe in die erfindungsgemäße Vorrichtung festgelegt wurde. Die Prüfung der Richtigkeit der Verknüpfungen erfolgt dann im Rahmen des erfindungsgemäßen Verfahrens.

Neben dem selektiven Einlesen verschiedener Verknüpfungsdaten ist es beim erfindungsgemäßen Verfahren auch möglich, die Informationen einer Maschinenbauzeichnung, die beispielsweise in einem CAD-System angefertigt wurde, im Rahmen eines fakultativ wählbaren Verfahrensschrittes direkt einzulesen.

In weiteren Verfahrensschritten wird dann auf der Basis der eingelesenen Daten eine Auswahl von Busmodulen getroffen und diese Busmodule verschiedenen Konstruktionsdaten bzw. anzusteuernden Sensoren und/oder Aktoren von Maschinen oder Maschinenteilen zugeordnet. Auf Grundlage dieser Verknüpfungen können dann sogenannte Signallisten erzeugt werden.

Bei der Weiterverarbeitung der im Verfahrensschritt des Erfassens, Speicherns und Selektierens aufgenommenen Informationen werden allerdings nicht nur Busmodule mit anzusteuernden Peripheriegeräten verbunden, sondern in einem weiteren Schritt die Busmodule selbst ebenfalls wechselseitig miteinander verbunden. Die daraus resultierende Anordnung der Busmodule wird im Zusammenhang mit dem erfindungsgemäßen Verfahren im Schritt der Ausgabe bzw. Darstellung der Daten in Form einer Busverdrahtungsliste ausgegeben.

Mit Bezug auf die Erstellung der oben beschriebenen Datenlisten umfaßt das erfindungsgemäße Verfahren einen weiteren Schritt, welcher optional auf Datensätze bzw. Daten angewendet werden kann, so daß den Daten bzw. den Datensätzen eine Adresse zugeordnet wird. In der Folge dient diese Adressierung im wesentlichen zur Weiterverarbeitung der Daten über das von einem Programmierer zu erstellende Automatisierungsprogramms.

In weiterer höchst vorteilhafter Weiterbildung des Erfindungsgegenstandes, weist das erfindungsgemäße Verfahren ferner einen Verfahrensschritt auf, während dem auf der Basis der eingegebenen und/oder verknüpften Daten eine Bussystemarchitektur bzw. Bus-Topologie erstellt wird. Nach dem Aufbau des Bussystems wird dann im Rahmen des erfindungsgemäßen Verfahrens, die auf der Grundlage der eingegebenen Daten bzw. Parameter erstellte Bus-Topologie auf technische Realisierbarkeit geprüft. Sollten in diesem Zusammenhang Probleme auftreten, ist es im Rahmen eines weiteren Schritts des erfindungsgemäßen Verfahrens möglich, Einstellungsvorschläge zu machen, die zu einem lauffähigen Bussystem führen würden. Unabhängig davon können natürlich auch manuell Daten eingegeben werden.

In vorteilhafter Weiterbildung des Erfindungsgegenstandes ist es auch möglich, in einem weiteren Verfahrensschritt die im Laufe des Verfahrens gewonnen Daten an ein ECAD-Datenbearbeitungs-Werkzeug weiterzugeben. Auf diese Weise ist es möglich, aus den gewonnen Daten direkt einen Schaltplan zu entwickeln, der dann praktisch realisiert werden kann.

Die Erfindung wird nachfolgend anhand bevorzugter Ausführungsformen und unter Bezugnahme auf die beigelegten Zeichnungen detailliert beschrieben.

Es zeigen:
- Fig. 1: eine ausgabenorientierte Darstellung des erfindungsgemäßen Verfahrens bzw. der erfindungsgemäßen Vorrichtung;
- Fig. 2: eine schematische Darstellung, welche den Aufbau eines Bussystems auf der Grundlage eingelesener mechanischer Konstruktionsparameter veranschaulichen soll;
- Fig. 3: den prinzipiellen Bildschirmaufbau der erfindungsgemäßen Projektionsvorrichtung;
- Fig. 4: eine schematische Darstellung, die den Bildschirmaufbau darstellt, wenn als Ansicht die Aufbau-Sicht gewählt wurde;
- Fig. 5: den Bildschirmaufbau der erfindungsgemäßen Vorrichtung, wenn als Ansicht die Signalliste-Sicht gewählt wurde;
- Fig. 6: den schematischen Bildschirmaufbau der erfindungsgemäßen Vorrichtung, wenn als Ansicht die Busverdrahtungsliste-Sicht gewählt wurde;
- Fig. 7: eine Übersicht über mögliche Lösungsvarianten im Rahmen des erfindungsgemäßen Verfahrens und der erfindungsgemäßen Vorrichtung.

Beim nachfolgend detailliert beschriebenen Ausführungsbeispiel handelt es sich im wesentlichen um ein Werkzeug bzw. Tool zur Planung, Parametrierung und Konfiguration von Automatisierungsanlagen, das aus mehreren einzelnen Werkzeugen, die im Rahmen des erfindungsgemäßen Verfahrens bzw. der erfindungsgemäßen Vorrichtung jeweils für Teilaufgaben zuständig sind, besteht.

Die erfindungsgemäße Vorrichtung unterstützt einerseits die Planung nach dem bisherigen Stand der Technik. Dabei werden Feldbusmodule, Sensoren und Aktoren aus einem elektronischen, kundenspezifischem Katalog ausgewählt und deren Verschaltung untereinander auf Funktionalität abgeprüft, wobei daraus eine Verdrahtungsvorgabe generiert wird. In diesem Zusammenhang steht auch die Fähigkeit des erfindungsgemäßen Tools, die Planung der Verbindungen der Feldbusmodule und der Anschlüsse an die Module auf ein Minimum zu reduzieren.

Andererseits werden im Rahmen der Unterstützung bekannter im wesentlichen manuell geführter Planungsmethoden die maschinenbaulichen Daten in die Vorrichtung eingelesen. Bei der Verarbeitung der Daten stellt das erfindungsgemäße System fest, welche Peripheriesignale beispielsweise von Sensoren oder Aktoren zum Betrieb der Anlage erfaßt, gesetzt und verarbeitet werden müssen. Dabei kann auch ein externer Zugriff auf die oben beschriebe Zuordnung an der erfindungsgemäßen Vorrichtung erfolgen. Je nach Art der einzusetzenden Sensoren und Aktoren wie z. B. maximale Stromaufnahme des Sensors, sowie deren Anzahl, wählt die erfindungsgemäße Vorrichtung entsprechend Feldbusmodule aus einem definierten Katalog aus. Wobei auch an dieser Stelle darauf verwiesen sei, daß bei dieser Auswahl kein ausschließlicher Automatismus der erfindungsgemäßen Vorrichtung vorgegeben ist, sondern auch externe Zugriffs- und Eingriffsmöglichkeiten auf die Selektion der Module je nach Erfordernis möglich sind. Entsprechendes gilt auch für die nachfolgenden Funktionen der erfindungsgemäßen Vorrichtung. In der Regel greift die Vorrichtung dabei auf bereits im Zusammenhang mit bestehenden Automatisierungssystemen verwendete Module zurück und legt fest, welche Peripheriesignale an welchem Feldbusmodul angeschlossen werden und wo in der Anlage die einzelnen Module plaziert werden. Anschließend wird die Bustopologie erzeugt und die zur Realisierung erforderlichen Busmodule, die benötigten Kabel und gegebenenfalls notwendigen Schnittstellenumsetzer bestimmt. Die erfindungsgemäße Vorrichtung kann, falls erwünscht, auch die benötigte Kabellänge abschätzen, wenn beispielsweise eine Kartographie möglicher Maschinenstandorte eingegeben wurde.

Im Rahmen einer vereinfachten Ausführungsform der erfindungsgemäßen Vorrichtung, können von dieser bereits von verantwortlichen Personen erstellte Signallisten verarbeitet werden, welche ansonsten jedoch von der Vorrichtung selbst erstellt werden. Die Signallisten beinhalten, wie bereits oben geschildert, im wesentlichen Informationen zur Signalisation einzelner Maschinenteile.

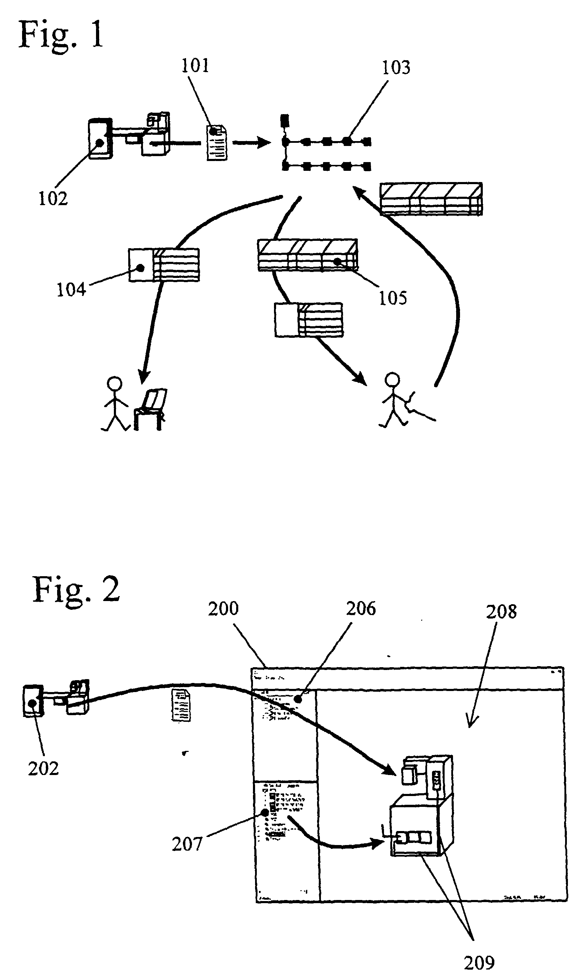

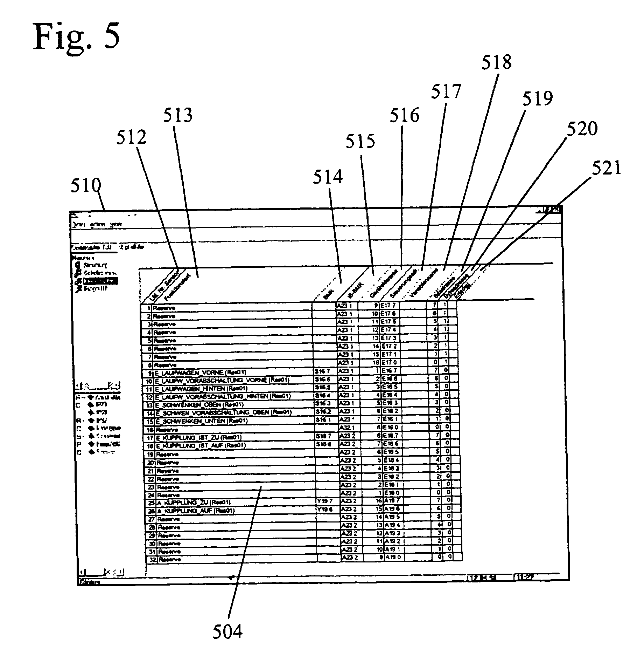

Figur 1 veranschaulicht in diesem Zusammenhang das Einlesen 101 und die Weiterverarbeitung der Signallistendaten 104. Dabei entsteht im vereinfachten Fall durch einen Planer und im automatisierten Fall vom erfindungsgemäßen System selbst, die Signalliste aus der Anpassung der mechanischen 102 und elektrotechnischen 103 Konstruktion. Sie enthält hierbei insbesondere Daten über Peripheriesignale, die in der Folge Busmodulen zugeordnet werden. Dies sind beispielsweise Informationen über die fortlaufende Nummer des Peripheriesignals, seine Funktion und sein Betriebsmittelkennzeichen (BMK). (siehe hierzu Fig. 5).

Außerdem erstellt die erfindungsgemäße Vorrichtung oder in der vereinfachten Ausführungsform ebenfalls ein Planer zu jedem Maschinenteil 102 eine der Signalliste 104 zugeordnete Busverdrahtungsliste 105, die Informationen zum Maschinenteil 102 und dem Feldbusmodultyp enthält. Sowohl in der vereinfachten als auch in der voll automatisierten Verwendung der erfindungsgemäßen Vorrichtung werden im nachfolgenden Verfahrensschritt die Signalliste 104 und die Busverdrahtungsliste 105 vervollständigt. Dabei werden in die Signalliste 104 zu jedem Sensorsignal das Betriebsmittelkennzeichen des angeschlossenen Feldbusmoduls und die Modulklemme eingetragen und an den Sensor bzw. Aktor angeschlossen. Ferner wird die Busverdrahtungsliste 105 durch das Betriebsmittelkennzeichen (BMK) des verwendeten Interbusmoduls und durch die Reihenfolge der verwendeten Interbusmodule ergänzt und die notwendigen Meter vom jeweils zu verwendenden Kabeltyp aufgeführt. Die ausgefüllten bzw. bestimmten Listen werden dann bei beiden Ausführungsformen mit der erfindungsgemäßen Vorrichtung weiterverarbeitet. Die erfindungsgemäße Vorrichtung erzeugt auf Grundlage der zugeführten Daten insbesondere aus der Busverdrahtungsliste 105 die Feldbustopologie. Ferner überprüft die erfindungsgemäße Vorrichtung, ob die erzeugte Bustopologie technisch realisierbar ist, oder ob sie Fehler enthält. Darüber hinaus wird die Signalliste 104 die erfindungsgemäße Vorrichtung anhand der Information, welches Busgerät eingesetzt wurde und welche Geräteklemme benutzt wurde, um Informationen über die Bitadresse und Byteadresse entsprechend ergänzt.

Wie bereits oben erwähnt sind auch manuelle Anpassung der von der Vorrichtung bestimmten Parameter bzw. Bus-Topologien möglich. Auf diese Weise erlaubt die erfindungsgemäße Vorrichtung bzw. das erfindungsgemäße Verfahren, falls erforderlich, im Rahmen eines interaktiven Prozesses die Anpassung bzw. Abstimmung der projizierten Bussysteme, an die praktischen Erfordernisse bei deren Umsetzung.

Im Rahmen einer weiteren bevorzugten Ausführungsform bzw. Verwendung der erfindungsgemäßen Vorrichtung kommt ein sogenannter Busaufbaueditor 200 (Figur 2) zum Einsatz.

Vermittels des Busaufbaueditor 200 werden maschinenbezogene Daten 202 beispielsweise einer Maschinenbauzeichnung eines Maschinenteils in die erfindungsgemäße Vorrichtung eingelesen. Der Busaufbaueditor 200 plaziert die zu dem Maschinenteil gehörenden Feldbusmodule 206 links oben in der Ecke einer Ausgabeseite, wenn die Busverdrahtungsliste 105 für dieses Maschinenteil 102, 202 schon fertig ist. Falls dies nicht der Fall sein sollte, kann die erfindungsgemäße Vorrichtung entweder selbsttätig oder durch extern geführte Anweisungen aus einem firmenspezifischen Verzeichnis von verwendeten Feldbusmodulen einzelne Module auswählen 207. In beiden Fällen können die Module auf der Maschinenbauzeichnung 208 frei plaziert werden. Die Module werden hierbei untereinander mit Linien 209 verbunden, die die Kabel für Datenübertragung und Spannungsversorgung dargestellen. Diesen Linien werden dann beispielsweise Parameter für Kabel, wie deren Länge, zugeordnet. Aus den so hinterlegten Informationen kann die erfindungsgemäße Vorrichtung automatisch oder fakultativ extern geführt eine Busverdrahtungsliste 105 und eine Bustopologie erzeugen, oder die Informationen in ein ECAD-Tool importieren bzw. exportieren und einen Schaltplan erzeugen.

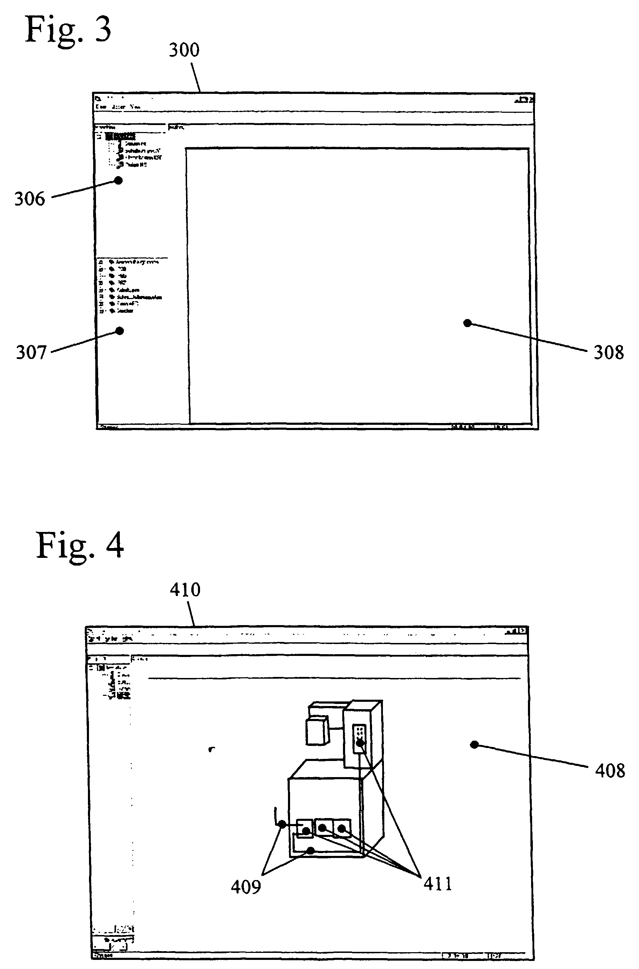

In Fig. 3 ist der prinzipielle Bildschirmaufbau 300 dargestellt. Links oben 306 wird die Anlage visualisiert, Links unten 307 befindet sich das elektronische Gerätelager, aus dem der Anwender oder die erfindungsgemäße Vorrichtung Geräte selektieren kann. Auf der rechten Seite 308 erscheint die vom Benutzer unter dem Menüpunkt "View" gewählte Ansicht.

Aufbaubild Fig. 4 zeigt den Bildschirmaufbau, wenn als Ansicht 410 "Aufbau" gewählt wurde. In dem rechten Teil des Bildes 408 befindet sich im Hintergrund die Maschinenbauzeichnung. Im Vordergrund befinden sich schematische Zeichnungen der Interbusmodule 411 und der Kabel 409, die sie untereinander verbinden. Der abgebildete Teilschritt des erfindungsgemäßen Verfahrens dient dazu, die Spannungsversorgung und Busverbindung der Module zu planen und dem Benutzer die Möglichkeit zu geben, die Module in dem Programm so anzuordnen, wie sie in der Anlage tatsächlich eingebaut sind.

Signalliste Fig. 5 zeigt den Bildschirmaufbau. wenn als Ansicht 510 "Signalliste" 504 gewählt wurde. In dem rechten Teil des Bildes befindet sich die Signalliste 504 mit den Spalten "Lfd. Nr. Sensor" 512, "Funktionstext" 513, "BMK" 514, "IB-BMK" 515, "Geräteklemme" 516, "Steuerungsadresse" 517, "Variablenname" 518, "Bitadresse" 519, "Byteadresse" 520 und "Erledigt" 521.

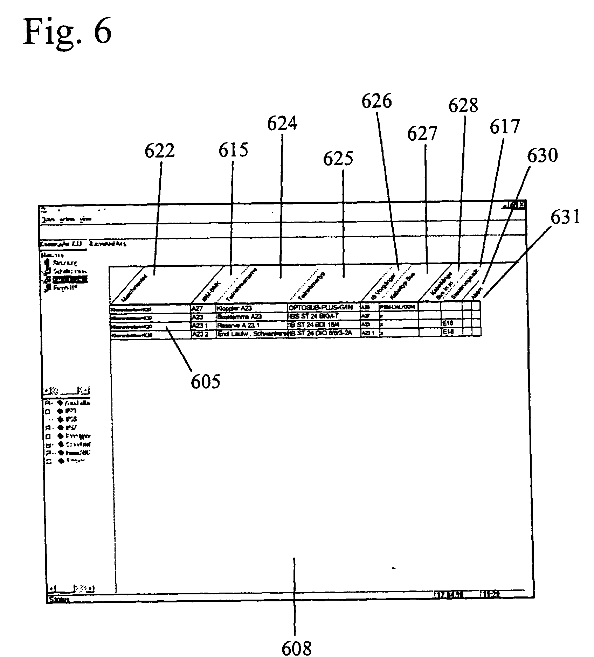

Busverdrahtungsliste Fig. 6 zeigt den Bildschirmaufbau, wenn als Ansicht 610 "Busverdrahtungsliste" 605 gewählt wurde. In dem rechten Teil des Bildes 608 befindet sich die Busverdrahtungsliste 605 mit den Spalten "Maschinenteil" 622, "IB-BMK" 615, "Teilnehmername" 624, "Teilnehmertyp" 625, "IB-Vorgänger" 626, "Kabeltyp Bus" 627, "Kabellänge in m" 628, Steuerungsadresse" 617, "Alternative" 630 und "Erledigt" (631).

Die Spalte "Erledigt" bzw. "Alternative" dient im erfindungsgemäßen Sinne als Ergebnisspalte für die praktische Realisierung. Dort trägt beispielsweise die verantwortliche Person Anmerkungen ein, an welchen Stellen er von den Vorgaben der bestimmten Planung bei der praktischen Umsetzung abweichen mußte. Diese Informationen kann dann wiederum in die erfindungsgemäße Vorrichtung eingelesen werden und zur Anpassung des dort vorliegenden Standes im Sinne eines Soll-Ist-Vergleichs genutzt werden.

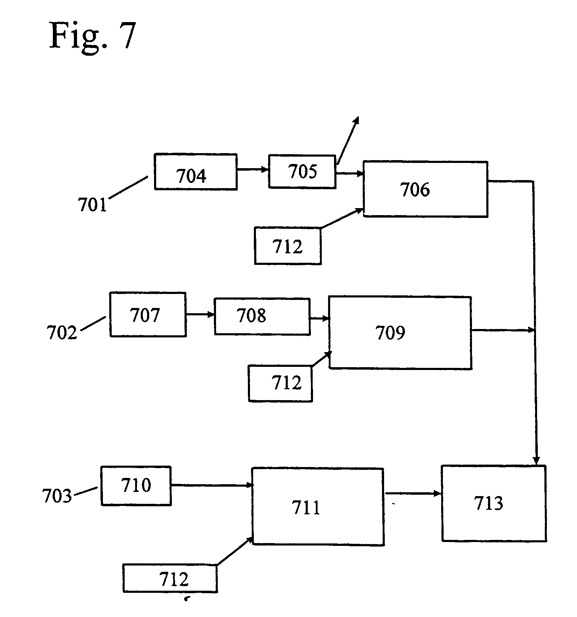

Aus Figur 7 ist ein Blockschaltbild zu entnehmen, welches in einer Übersicht verschiedene Ebenen des erfindungsgemäßen Verfahrens erläutern soll. Es werden dort grob aufgegliedert insgesamt drei mögliche Bearbeitungsebenen unterschieden 701, 702, 703, die in der erfindungsgemäßen Vorrichtung modulartig zusammengefaßt sind. Es handelt sich dabei um die Ebene der Signallisten-Erstellung 701 im Signallisten-Tool bzw. Werkzeug, um die der Busverdrahtungslisten-Erstellung 702 im Busverdrahtungslisten-Werkzeug und um die Ebene des Busaufbaueditors 703, welcher die zuvor bezeichneten Ebenen zumindest teilweise umfassen kann und darüber hinaus zum Topologieaufbau einsetztbar ist. Die einzelnen Werkzeuge können entweder selektiv oder in Kombination angewandt werden. Die erfindungsgemäße Vorrichtung bietet gerade deshalb die Möglichkeit auch bei bestehenden papierorientierten Verfahren unterstützend eingesetzt zu werden.

Die Signallisten-Erstellung weist als wesentliche Schritte den Schritt des Bestimmens und/oder Erfassens der Peripheriesignale und der Betriebsmittelkennzeichen der Sensoren und Aktoren von Maschinenteil 704, den Schritt der Signallistengenerierung 705 und den Schritt des Adressierens, durch das Erzeugen von Bit- und Byteadressen 706 auf.

Die Busverdrahtungslisten-Erstellung 702 erfolgt insbesondere nach den Unterschritten: Erfassen und/oder Festlegen der relevanten Maschinenteile und des Busteilnehmertyps 707, Erzeugen der Busverdrahtungsliste 708 und Prüfen der Verdrahtung 709.

Im Rahmen der Ebene 703 des Busaufbaueditors sind unter anderem der Schritt des Einlesens der Maschinenbauzeichnung 710 und der Schritt des Prüfens der Verdrahtung und des Erzeugens einer vollständigen Verdrahtungsvorschrift 711 wesentliche Verfahrensschritte.

Alle Ebenen erlauben die Möglichkeit ergänzende Eingaben zu machen 712, um beispielsweise einen "Ist-Soll" bzw. "Praxis-Theorie"-Abgleich durchzuführen zu können oder um zusätzlich Module und Kabel d.h. Informationen beizufügen.

Ferner schließen alle Ebenen an eine sogenannte Dokumentationsebene 713 an, auf der beispielsweise über ein Dokumentations-Tool Schaltungen und/oder Dokumentationen erzeugbar sind. Ein solches Werkzeug kann beispielsweise auch das bereits erwähnte ECAD-Tool sein.

## Patentansprüche

1. Vorrichtung zur Bestimmung von Bussystem-Parametern und/oder -Konfigurationen, insbesondere von Feldbussystemen, in Form von digitalen Informationen, Listen, Plänen sowie graphischen Darstellungen umfassend:
- eine Einrichtung zum Erfassen, Speichern und Selektieren maschinenbezogener Daten und busbezogener Daten,
- wenigstens eine Ausgabeeinrichtung zum Ausgeben und/oder Darstellen und/oder Übermitteln der Daten

2. Vorrichtung nach Anspruch 1, dadurch gekennzeichnet, daß die Vorrichtung eine Einrichtung zum selektiven manuellen und/oder automatischen Verknüpfen der Eingabedaten aufweist.

3. Vorrichtung nach Anspruch 1 oder 2, dadurch gekennzeichnet, daß die Vorrichtung eine Einrichtung zum Bereitstellen einer Bussystemarchitektur auf Basis der Eingabedaten aufweist.

4. Vorrichtung nach Anspruch 1, 2 oder 3, dadurch gekennzeichnet, daß die Vorrichtung ferner eine Einrichtung zur Adressierung von Busdaten umfaßt.

5. Vorrichtung nach einem der vorherstehenden Ansprüche, dadurch gekennzeichnet, daß die maschinenbezogenen Daten insbesondere Konstruktionsdaten und insbesondere Daten zu Sensoren und/oder Aktoren aufweisen.

6. Vorrichtung nach einem der vorherstehenden Ansprüche, dadurch gekennzeichnet, daß die Vorrichtung eine Einrichtung zum interaktiven Verknüpfen von Datenfelder und/oder Daten umfaßt.

7. Vorrichtung nach einem der vorherstehenden Ansprüche, dadurch gekennzeichnet, daß die Vorrichtung vorzugsweise zur Parametrierung und Konfiguration von Feldbussystemen einsetzbar ist.

8. Vorrichtung nach einem der vorherstehenden Ansprüche, dadurch gekennzeichnet, daß sie eine Einrichtung zum Einlesen von Daten einer Maschinenbauzeichnung aufweist.

9. Vorrichtung nach einem der vorherstehenden Ansprüche, dadurch gekennzeichnet, daß in die Vorrichtung ein ECAD-Bearbeitungs-Tool anzubinden ist.

10. Verfahren zur Bestimmung von Bussystem-Parametern und/oder -Konfigurationen, insbesondere von Feldbussystemen, in Form von digitalen Informationen, Listen, Plänen sowie graphischen Darstellungen, mit den nachfolgenden Schritten:
a) Erfassen, Speichern und Selektieren
- maschinenbezogener Daten und
- busbezogener Daten,
b) Ausgabeeinrichtung zum Ausgeben und/oder Darstellen und/oder Übermitteln der Daten.

11. Verfahren nach Anspruch 10, dadurch gekennzeichnet, daß der Schritt des Erfassens, Speicherns und Selektierens maschinenbezogener Daten insbesondere den Schritt des Erfassens von Konstruktionsdaten umfaßt.

12. Verfahren nach Anspruch 10 oder 11, dadurch gekennzeichnet, daß der Schritt des Erfassens, Speicherns und Selektierens von Konstruktionsdaten insbesondere den Schritt des Erfassens von Daten von anzusteuernden Sensoren und/oder Aktoren von Maschinen oder Maschinenteilen umfaßt.

13. Verfahren nach Anspruch 10, 11 oder 12, dadurch gekennzeichnet, daß der Schritt des Erfassens, Speicherns und Selektierens den Schritt des Einlesens einer Maschinenbauzeichnung umfaßt.

14. Verfahren nach einem der vorherstehenden Ansprüche, dadurch gekennzeichnet, daß das Verfahren den Schritt des abgestimmten Auswählens und Zuordnens von Busmodulen zu den Konstruktionsdaten umfaßt.

15. Verfahren nach einem der vorherstehenden Ansprüche, dadurch gekennzeichnet, daß der Schritt des Auswählens und des Zuordnens von Busmodulen den Schritt des zumindest teilweisen Verknüpfens der maschinenbezogenen mit den busbezogenen Daten umfaßt.

16. Verfahren nach einem der vorherstehenden Ansprüche, dadurch gekennzeichnet, daß das Verfahren den Schritt des zumindest teilweisen abgestimmten Verküpfens der Busmodule untereinander umfaßt.

17. Verfahren nach einem der vorherstehenden Ansprüche, dadurch gekennzeichnet, daß das Verfahren den Schritt des Aufbaus einer Bussystemarchitektur auf Basis der Eingabedaten umfaßt.

18. Verfahren nach einem der vorherstehenden Ansprüche, dadurch gekennzeichnet, daß das Verfahren den Schritt des Adressieres von Daten umfaßt.

19. Verfahren nach einem der vorherstehenden Ansprüche, dadurch gekennzeichnet, daß das Verfahren den Schritt des Prüfens der Bussystemarchitektur umfaßt.

20. Verfahren nach einem der vorherstehenden Ansprüche, dadurch gekennzeichnet, daß das Verfahren den Schritt des Datenaustausches mit einem ECAD-Datenbearbeitungs-Werkzeug umfaßt.
